Europäisches Patentamt

European Patent Office

Office européen des brevets

(19)

(11) Numéro de publication : **0 469 936 A1**

(12) # DEMANDE DE BREVET EUROPEEN

(21) Numéro de dépôt : **91401291.9**

(22) Date de dépôt : **17.05.91**

(51) Int. Cl.⁵ : **G03B 21/60**

(30) Priorité : **30.07.90 FR 9009704**

(43) Date de publication de la demande :
**05.02.92 Bulletin 92/06**

(84) Etats contractants désignés :
**BE ES IT**

(71) Demandeur : **Formhals, Dominique**
**43 rue de la Mairie**
**F-67117 Furdenheim (FR)**
Demandeur : **Pepin, Yves**
**13 rue Jacques Dulud**
**F-92200 Neuilly sur Seine (FR)**

(72) Inventeur : **Formhals, Dominique**
**43 rue de la Mairie**
**F-67117 Furdenheim (FR)**
Inventeur : **Pepin, Yves**
**13 rue Jacques Dulud**
**F-92200 Neuilly sur Seine (FR)**

(74) Mandataire : **Poidatz, Emmanuel**
**Cabinet M. SABATIER 83, Avenue Foch**
**F-75116 Paris (FR)**

(54) **Dispositif de projection d'eau former un écran récepteur d'images.**

(57)    Un tel dispositif projette de l'eau sous pression pour former un écran (1) constitué de gouttelettes (2) transparentes susceptibles de réfléchir des rayons lumineux (3) le frappant par rétroprojection (4).
    Selon l'invention, il comprend une plaque d'éclatement (7) sensiblement verticale qui est disposée sur la trajectoire de l'eau véhiculée par l'intermédiaire d'un surpresseur (8) dans un conduit (9) sensiblement horizontal, dont l'extrémité, en liaison mécanique avec la dite plaque d'éclatement (7), définit avec celle-ci une ouverture supérieure (10) constituant un échappement à une lame d'eau orientée verticalement.
    Application au matériel de projection et de spectacle.

EP 0 469 936 A1

Jouve, 18, rue Saint-Denis, 75001 PARIS

FIG.1

La présente invention concerne un dispositif de projection d'eau sous pression pour former un écran constitué de gouttelettes transparentes susceptibles de réfléchir des rayons lumineux le frappant par rétroprojection et le rendant ainsi récepteur d'images, animées ou fixes .

L'utilisation de tels dispositifs a pour objectif la réalisation de spectacles nocturnes en plein air, sans qu'il soit nécessaire de disposer d'écran matériel, dont la mise en oeuvre serait de toute façon incompatible avec l'environnement dans lequel se déroule généralement ce type de spectacle.

Des dispositifs de projection d'eau pour former un écran réfléchissant sont connus et consistent à disposer côte à côte de manière alignée, des jets d'eau obtenus par exemple à partir d'une rampe, dans laquelle est amenée l'eau sous pression giclant par des buses de sorties, en communication avec l'intérieur de la rampe et en nombre correspondant à celui des jets d'eau à réaliser en fonction de la largeur recherchée de l'écran. Il est évident que plus la largeur du dit écran sera importante, plus il y aura de perte de charge car les gicleurs seraient multipliés et par conséquent la hauteur de l'écran serait proportionnellement diminuée, à moins bien entendu d'augmenter la pression par l'intermédiaire d'un matériel plus puissant, ce qui augmenterait le coût du dispositif.

Mais il existe un autre inconvénient majeur, concernant la qualité de l'écran d'eau. En effet un écran ainsi obtenu ne présente pas de régularité de surface, car issu d'une pluralité de sources entraînant des jets juxtaposés de sections circulaires plus ou moins sécantes. On peut bien entendu imaginer résoudre ce problème en disposant de buses ayant des ajutages tels à créer des faisceaux d'eau angulaires plats, mais le chevauchement de ceux-ci provoquerait une irrégularité d'épaisseur et de densité de l'écran d'eau.

En fait, les problèmes majeurs rencontrés dans les dispositifs connus concernent l'instabilité de l'eau notamment en retombée, car n'étant animée d'aucune force spécifique, elle est donc sensible à toute autre force, en l'occurrence celle du vent. Les différences d'épaisseurs de l'écran et l'absence d'uniformité et de rigidité des masses d'eau en mouvement entraînent conséquemment une mauvaise définition de l'image projetée sur l'écran, provoquant un flou des contours, l'absence de détails, une confusion des traits et l'obligation d'une mise au point variable de l'objectif de l'appareil de projection d'images. L'analyse de ces différents inconvénients et de leurs origines ont conduit à la conclusion que la seule solution pour les résoudre serait la réalisation d'un écran constitué par une lame d'eau très fine, engendrée et entretenue par une forte pression.

Dans ce but la présente invention concerne un dispositif de projection d'eau sous pression pour former un écran constitué de gouttelettes transparentes susceptibles de réfléchir des rayons lumineux le frappant par rétroprojection et le rendant ainsi récepteur d'images, animées ou fixes, caractérisé en ce qu'il comprend une plaque d'éclatement sensiblement verticale qui est disposée sur la trajectoire de l'eau véhiculée par l'intermédiaire d'un surpresseur dans un conduit sensiblement horizontal, dont l'extrémité, en liaison mécanique avec la dite plaque d'éclatement définit avec celle-ci une ouverture supérieure constituant un échappement à une lame d'eau orientée verticalement.

Bien entendu la plaque d'éclatement pourra avoir une inclinaison par rapport à la verticale par exemple de quelques degrés vers l'arrière afin d'éviter que les retombées de gouttelettes n'aient lieu devant l'image projetée, mais plutôt derrière.

Selon une autre caractéristique de l'invention, la définition dimensionnelle et structurelle de l'écran est contrôlée par la forme de l'ouverture supérieure et par le débit et la pression du surpresseur.

Cette ouverture supérieure est obtenue par enlèvement de matière partiel opéré à l'extrémité du conduit entre la plaque d'éclatement et le dit conduit.

Selon un mode de réalisation préférentiel, l'ouverture supérieure est de contour semi-circulaire pratiquée sur la périphérie d'un conduit cylindrique pour l'obtention d'un écran constitué de gouttelettes projetées dans des directions couvrant un angle de 180°.

Pour l'obtention d'une telle ouverture, l'extrémité du conduit est une buse cylindrique entaillée selon un plan radial à sa partie supérieure et en liaison mécanique étanche avec la plaque d'éclatement à sa partie inférieure.

Selon une variante de réalisation de la buse, celle-ci est entaillée selon un plan oblique à sa partie supérieure pour former un angle ouvert par rapport à la partie inférieure de la plaque d'éclatement avec laquelle est en liaison mécanique étanche la dite buse à sa partie inférieure.

Une telle entaille oblique dans un corps cylindrique provoque une ouverture en forme de sifflet, dont la distance avec la plaque d'éclatement, formant sa largeur, est plus importante dans sa zone médiane supérieure que sur les zones latérales.

Ainsi les gouttelettes propulsées autour de l'axe vertical, donc d'inertie plus grande, seront d'une compacité moins importante de manière à ce qu'elles soient plus sensibles à la poussée en pression dans la dite zone médiane et compenser ainsi leur différence d'inertie par rapport aux gouttelettes issues des zones latérales de la dite ouverture en sifflet, de manière à obtenir un écran de forme régulière.

Selon une autre caractéristique de l'invention, la buse cylindrique est rapportée à l'extrémité du conduit.

Selon une autre caractéristique de l'invention le surpresseur est un turbo-compresseur.

Selon une autre caractéristique de l'invention la plaque d'éclatement et le conduit sont disposés solidairement sur un socle stabilisateur.

Selon une autre caractéristique de l'invention le socle stabilisateur est composé d'un cadre disposé horizontalement et entre deux bords latéraux duquel est fixée sensiblement perpendiculairement la plaque d'éclatement.

Selon une autre caractéristique de l'invention des nervures de renforcement sont disposées en équerre entre la plaque d'éclatement, sur sa face opposée à celle recevant la projection d'eau, et un bord longitudinal du cadre du socle stabilisateur.

Un tel dispositif selon l'invention est apte à permettre avantageusement l'obtention d'un écran formé par une lame d'eau sous pression de forme sensiblement semi circulaire pouvant atteindre une hauteur de 18 mètres et une largeur de 36 mètres.

La description qui va suivre en regard des dessins annexés, donné à titre d'exemple non limitatif fera mieux comprendre comment l'invention peut être réalisée.

La fig 1 est un schéma de principe d'un dispositif de projection d'eau selon l'invention.

La fig 2 représente à échelle réduite la configuration d'un écran obtenu avec le dispositif selon l'invention.

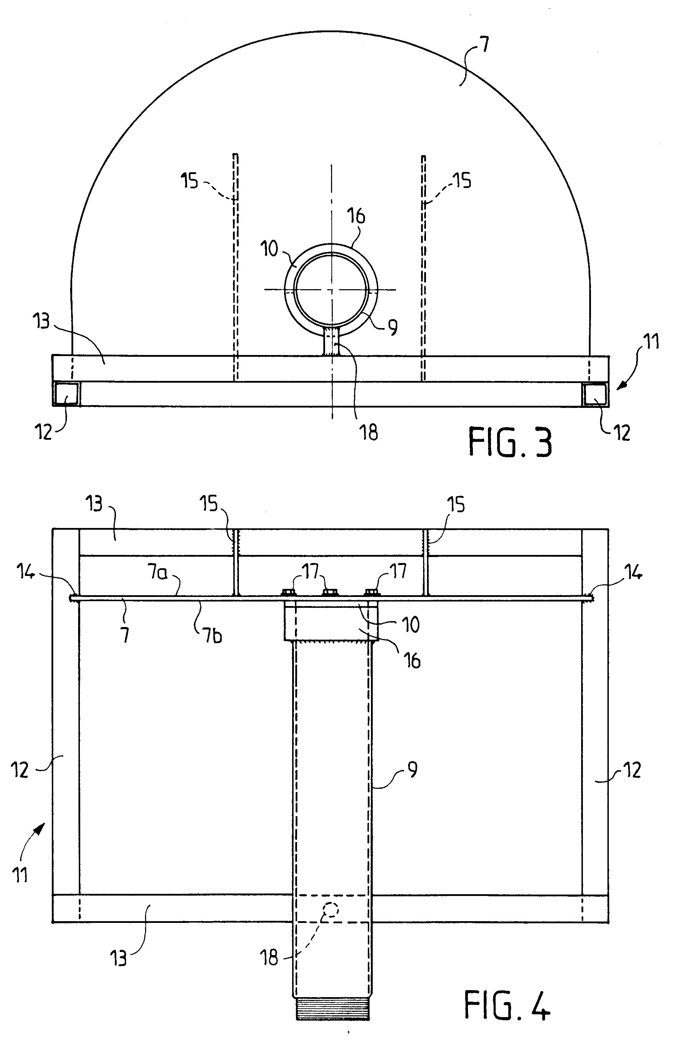

La fig 3 représente une vue arrière du dispositif de projection d'eau selon un exemple concret de réalisation.

La fig 4 est une vue de dessus du dispositif selon la figure 3.

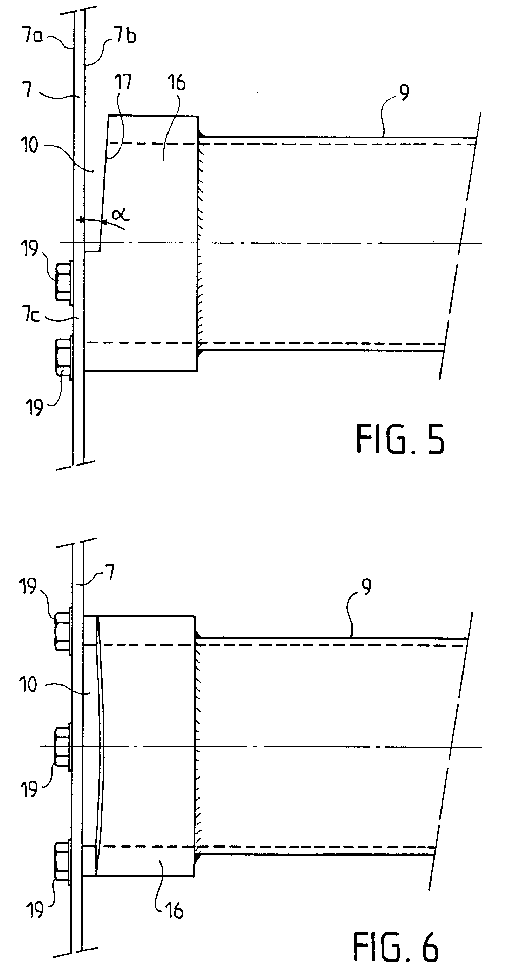

La fig 5 est une vue de détail à échelle agrandie du côté du dispositif selon la figure 3.

La fig 6 est une vue de dessus du détail de la figure 5.

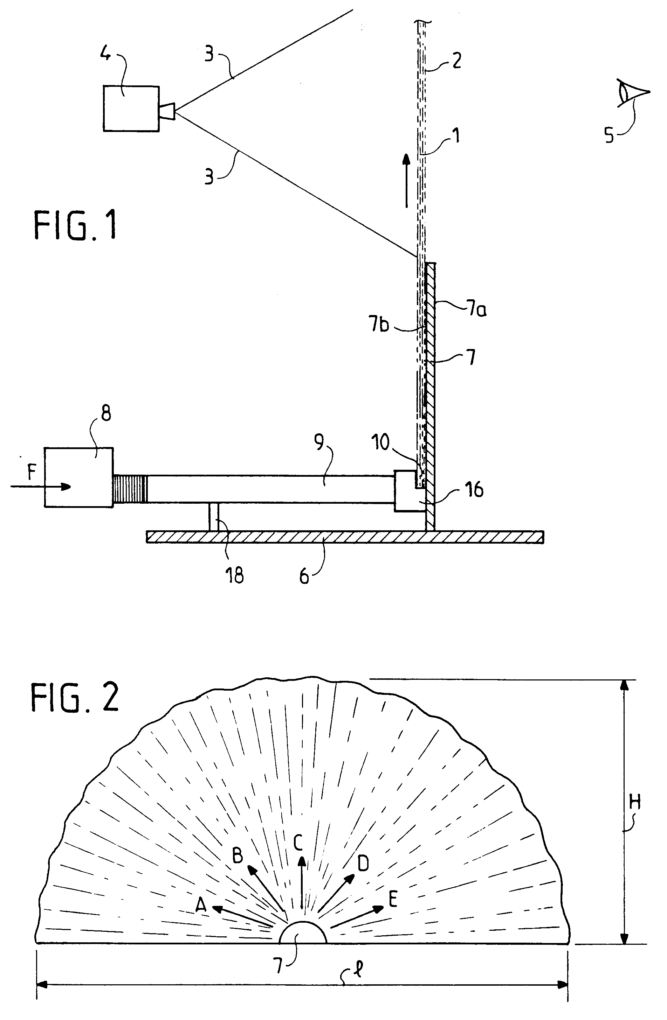

Le dispositif représenté schématiquement sur la figure 1 est un dispositif de projection d'eau sous pression pour former un écran 1 constitué de gouttelettes, 2 transparentes, susceptibles de réfléchir les rayons lumineux 3 le frappant, émis part un appareil de rétroprojection 4 et le rendant ainsi récepteur d'images, animées ou fixes, aptes à être perçues par un point visuel 5.

Le dispositif selon l'invention comprend un socle stabilisateur 6 sur lequel est disposé solidairement une plaque d'éclatement 7 verticale, située sur la trajectoire de l'eau véhiculée par l'intermédiaire d'un surpresseur 8, en l'occurrence un turbo-compresseur, dans un conduit 9 horizontal et perpendiculaire à la dite plaque d'éclatement 7. L'extrémité du conduit 9 est en liaison mécanique avec la plaque 7 et définit avec celle-ci une ouverture supérieure 10 constituant un échappement à une lame d'eau orientée verticalement et constituant l'écran 1.

Le conduit 9 est également supporté par le socle stabilisateur 6, ainsi que le turbo-compresseur 8 de manière à constituer un poids de lestage accroissant la stabilité de l'ensemble.

Le socle stabilisateur 6 est composé d'un cadre 11 horizontalement à plat sur le sol et formé par les tubes de section carrée latéraux 12 et longitudinaux 13. Sur les bords latéraux 12 du cadre 11 sont ménagées deux rainures 14 dans lesquelles prend position, pour y être retenue perpendiculairement, la plaque d'éclatement 7.

La plaque d'éclatement 7 est également par rapport au cadre 11, renforcée par des nervures 15 disposées entre la plaque d'éclatement 7, sur sa face opposée 7a à celle 7b recevant la projection d'eau, et un bord longitudinal 13 du cadre 11 du socle stabilisateur 6.

L'ouverture supérieure 10 est obtenue par enlèvement de matière partiel opéré à l'extrémité du conduit 9 entre la plaque d'éclatement 7 et le dit conduit 9.

Selon le présent exemple de réalisation, l'extrémité du conduit 9 est une buse 16 cylindrique rapportée, dans la partie supérieure de laquelle est réalisée une entaille oblique 17 de contour semi-circulaire pratiquée sur la périphérie de la dite buse cylindrique 16. L'entaille oblique 17 forme un angle ouvert, de 3 degrés, par rapport à la partie inférieure 7c de la plaque d'éclatement 7 avec laquelle est en liaison mécanique étanche la buse 16, par exemple par un cordon de soudure.

L'ouverture supérieure 10 ainsi réalisée permet l'obtention d'un écran 1 constitué de gouttelettes projetées dans des directions A, B, C, D, E, couvrant un angle de 180°.

La définition dimensionnelle et structurelle de l'écran 1 est contrôlée par la forme de l'ouverture supérieure 10 et par le débit et la pression du surpresseur.

Les essais ont démontrés qu'avec une alimentation en eau, suivant F, de 240m3/heure à 12 bars de pression et avec un conduit de diamètre interne égal à environ 110 millimètres, l'on obtenait, avec une buse, telle que décrit précédemment, un écran 1 sensiblement semi-circulaire de 18 mètres de hauteur "H" et de 36 mètres de largeur "I", d'une épaisseur moyenne de 10 cm ayant une excellente rigidité et conséquemment une bonne planéité. La fixation du conduit 9 et de la buse 16 sur le socle 6 ainsi que de la plaque d'éclatement 7, est effectuée d'une part par l'intermédiaire d'un taquet 18 faisant office d'entretoise entre la partie inférieure du conduit 9 et d'un bord longitudinal 13 du cadre 11 du socle 6, et d'autre part pour des vis 19 en prise dans l'épaisseur de la buse 16, à sa partie inférieure opposée à l'ouverture 10 et sur ses côtés latéraux immédiatement sous la dite ouverture 10.

## Revendications

**1/** Dispositif de projection d'eau sous pression pour former un écran (1) constitué de gouttelettes transparentes (2) susceptibles de réfléchir des rayons lumineux (3) le frappant par rétroprojection (4) et le rendant ainsi récepteur d'images, animées ou fixes, caractérisé en ce qu'il comprend une plaque d'éclatement (7) sensiblement verticale qui est disposée sur la trajectoire de l'eau véhiculée par l'intermédiaire d'un surpresseur (8) dans un conduit (9) sensiblement horizontal, dont l'extrémité, en liaison mécanique avec la dite plaque d'éclatement (7), définit avec celle-ci une ouverture supérieure (10) constituant un échappement à une lame d'eau orientée verticalement.

**2/** Dispositif selon la revendication 1 caractérisé en ce que la définition dimensionnelle et structurelle de l'écran (1) est contrôlée par la forme de l'ouverture supérieure (10) et par le débit et la pression du surpresseur (8).

**3/** Dispositif selon la revendication 2 caractérisé en ce que l'ouverture supérieure (10) est obtenue par enlèvement de matière partiel opéré à l'extrémité du conduit (9) entre la plaque d'éclatement (7) et le dit conduit (9).

**4/** Dispositif selon l'une des revendication 1 à 3 caractérisé en ce que l'ouverture supérieure (10) est de contour semi circulaire pratiquée sur la périphérie d'un conduit cylindrique (9) pour l'obtention d'un écran (1) constitué de gouttelettes (2) projetées dans des directions (A, B, C, D, E) couvrant un angle de 180°.

**5/** Dispositif selon la revendication 4 caractérisé en ce que l'extrémité du conduit (9) est une buse cylindrique (16) entaillée selon un plan radial à sa partie supérieure et en liaison mécanique étanche avec la plaque d'éclatement (7) à sa partie inférieure.

**6/** Dispositif selon la revendication 4 caractérisé en ce que l'extrémité du conduit (9) est une buse cylindrique (16) entaillée selon un plan oblique (17) à sa partie supérieure pour former un angle ouvert par rapport à la partie inférieure (7c) de la plaque d'éclatement (7) avec laquelle est en liaison mécanique étanche la dite buse (16) à sa partie inférieure (7c)

**7/** Dispositif selon les revendications 5 ou 6 caractérisé en ce que la buse cylindrique (16) est rapportée à l'extrémité du conduit (9).

**8/** Dispositif selon la revendication 2 caractérisé en ce que le surpresseur (8) est un turbo-compresseur.

**9/** Dispositif selon la revendication 1 caractérisé en ce que la plaque d'éclatement (7) et le conduit (9) sont disposés solidairement sur un socle stabilisateur (6).

**10/** Dispositif selon la revendication 9 caractérisé en ce que le socle stabilisateur (6) est composé d'un cadre (11) disposé horizontalement et entre deux bords latéraux (12) duquel est fixée sensiblement perpendiculairement la plaque d'éclatement (7)

**11/** Dispositif selon la revendication 10 caractérisé en ce que des nervures de renforcement (15) sont disposées en équerre entre la plaque d'éclatement (7), sur sa face opposée (7a) à celle (7b) recevant la projection d'eau, et un bord longitudinal (13) du cadre (11) du socle stabilisateur (6).

**12/** Dispositif selon la revendication 11 caractérisé en ce qu'il permet d'obtenir un écran (1) sensiblement semi-circulaire de 18 mètres de haut et de 36 mètres de large.

# FIG.1

# FIG. 2

FIG. 3

FIG. 4

7a  7b

7

17  16

9

10

α

19

7c

19

## FIG. 5

19  7

9

10

19

19  16

## FIG. 6

**Office européen des brevets**

# RAPPORT DE RECHERCHE EUROPEENNE

Numero de la demande

EP    91 40 1291

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 337 480 (ISHIKAWAJIMA-HARIMA HEAVY INDUSTRIES CO., LTD)<br>* page 4, ligne 1 - page 9, ligne 30; figures * <br>--- | 1 | G03B21/60 |
| A | CH-A-647 605 (J. OVERNEY)<br>* le document en entier *<br>--- | 1 | |
| A | FR-A-1 075 481 (P. ROBERT-HOUDIN ET AL.)<br>* le document en entier *<br><br>----- | 1 | |

**DOMAINES TECHNIQUES RECHERCHES (Int. Cl.5 )**

G03B

Le présent rapport a été établi pour toutes les revendications

| Lieu de la recherche | Date d'achèvement de la recherche | Examinateur |
|---|---|---|
| LA HAYE | 30 OCTOBRE 1991 | HERYET C. D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................

& : membre de la même famille, document correspondant

EPO FORM 1503 03.82 (P0402)